# FASCICULE DE BREVET EUROPEEN

(11) **EP 0 947 490 B1**
(45) Date de publication et mention de la délivrance du brevet: **02.07.2003**
(21) Numéro de dépôt: 98104451.4
(22) Date de dépôt: 12.03.1998
(51) Int. Cl.: C04B 41/87, C04B 35/486, G04B 37/22

(54) **La utilisation d'un article à base de zircone comme élément d'habillement résistant à l'usure d'une montre-bracelet, et procédé d'obtention d'un tel article**
Die Verwendung eines Gegenstands auf der Basis von Zirkonoxid als verschleissbeständiges Armbanduhrenteil und Verfahren zu seiner Herstellung
The use of a zirconia based article as wear resistant part of a wristwatch and method for its production

(43) Date de publication de la demande: 06.10.1999
(73) Titulaire: ASULAB S.A., 2074 Marin (CH)
(72) Inventeur: Michel, Béatrice, 1588 Montet sur Cudrefin (CH)
(74) Mandataire: Ravenel, Thierry Gérard Louis

(56) Documents cités:
- EP-A- 0 850 900
- US-A- 5 672 302
- PATENT ABSTRACTS OF JAPAN vol. 096, no. 002, 29 février 1996 & JP 07 277860 A (SEKISUI PLASTICS CO LTD), 24 octobre 1995 -& DATABASE WPI Section Ch, Week 9551 Derwent Publications Ltd., London, GB; Class LO2, AN 95-400810 XP002072874
- DATABASE WPI Section Ch, Week 8815 Derwent Publications Ltd., London, GB; Class L02, AN 88-101233 XP002072875 & JP 63 050 383 A (HITACHI METALS LTD)
- PATENT ABSTRACTS OF JAPAN vol. 014, no. 431 (C-0759), 17 septembre 1990 & JP 02 167875 A (TORAY IND INC), 28 juin 1990
- DATABASE WPI Section Ch, Week 8230 Derwent Publications Ltd., London, GB; Class M13, AN 82-62489E XP002031842 & JP 57 098 671 A (SUWA SEIKOSHA KK)

## Description

La présente invention concerne un article à base de zircone, notamment fritté, et en particulier un tel article dont la structure chimique est modifiée sur une partie de son épaisseur pour lui conférer une surface extérieure ayant un aspect métallique doré. L'invention concerne également l'utilisation, d'un tel article comme élément d'habillement d'une montre-bracelet, en particulier pour réaliser des éléments de construction de boîtes de montres ou de bracelets. La présente invention concerne enfin un procédé d'obtention d'un tel article.

Parmi tous les matériaux connus, les métaux sont très largement utilisés en raison de certaines de leurs propriétés qui s'avèrent très intéressantes : grande résistance mécanique, ténacité élevée, conductivité électrique, etc. En outre, l'éclat caractéristique de ces métaux, en particulier celui des métaux précieux tel que l'or, est très recherché pour les applications décoratives comme pour la réalisation de boîtes de montres ou analogues. La dureté de l'or massif ou des revêtements de couleur or est toutefois bien inférieure à celle des céramiques, ce qui peut conduire à une usure importante dans de nombreuses utilisations courantes telles que la réalisation de pièces d'habillage d'horlogerie comme des boîtes de montre ou des bracelets.

Pour remédier à ces inconvénients, on a depuis longtemps cherché à augmenter la dureté des articles en or massif ou comportant un revêtement de couleur or. Toutefois, les procédés de métallurgie traditionnels ne permettent pas d'atteindre de très grandes duretés, c'est-à-dire supérieures à 1000 HV (dureté Vickers), qui permettraient de réaliser des pièces décoratives inrayables ayant un aspect métallique doré.

C'est pourquoi on a proposé d'augmenter la dureté des métaux par addition de particules très dures. On a ainsi réalisé des composites biphasés constitués d'une phase métallique enrobant des particules dures qui occupent fréquemment la majeure partie du volume du matériau. Un certain nombre de matériaux de ce type ayant un aspect métallique doré ont été développés et sont aujourd'hui couramment utilisés à l'échelle industrielle. On les nomme généralement "cermet" lorsqu'ils sont en matière céramique, par exemple en nitrure de titane.

Tous ces matériaux ont toutefois en commun le fait qu'ils comportent une phase métallique distincte qui peut limiter leur résistance à la corrosion et leurs propriétés mécaniques à haute température.

De plus, cette phase métallique qui joue le rôle de liant contient toujours du nickel ou du cobalt, toutes les tentatives pour substituer d'autres métaux à ces éléments ayant échoué jusqu'ici. Or, l'utilisation du nickel ou cobalt dans des applications qui conduisent à un contact prolongé avec la peau, comme par exemple les applications dans l'horlogerie et la bijouterie, doivent être évitées car ces éléments sont connus pour provoquer fréquemment des allergies.

Enfin, ces matériaux sont généralement difficiles à mettre en forme. Ceci constitue une limitation importante lors de la fabrication de pièces d'habillage pour l'horlogerie ou de pièces de bijouterie dont les formes sont souvent complexes et renchérit leurs coûts de fabrication.

L'invention a pour but de remédier aux inconvénients de l'art antérieur en fournissant un article réalisé à base de zircone, notamment frittée, présentant toutes les propriétés intéressantes des pièces en céramique conventionnelle (dureté, facilité de mise en forme, absence d'effet allergène, etc.) tout en présentant l'éclat de pièces métalliques dorées.

L'invention a également pour but d'utiliser de façon avantageuse certaines propriétés du nitrure de zirconium obtenu par transformation superficielle de la zircone à des fins esthétiques et décoratives dans le cadre d'applications au domaine horloger.

L'invention a également pour but de fournir un procédé d'obtention d'un tel article en zircone qui puisse être facilement industrialisé et qui permette d'obtenir ces articles à des cadences et à des coûts compatibles avec les besoins du marché.

A cet effet, l'inventeur a fabriqué un article à base de zircone ayant un coeur en ZrO2 et/ou en ZrO2 partiellement réduit, caractérisé en ce qu'il comprend, sur au moins une partie de sa surface, une couche superficielle venant de matière avec ledit article, ladite couche superficielle présentant une pluralité de régions dont une région extérieure est formée de nitrure de zirconium ayant un éclat métallique doré.

La couche superficielle peut présenter une région de transition située entre le coeur et la région extérieure, ladite région de transition comprenant du nitrure de zirconium sous-stoechiométrique et des oxynitrures de zirconium.

On remarquera que la composition chimique de la couche superficielle varie en fonction de la profondeur mesurée à partir de la surface de l'élément d'habillement et passe de façon continue, c'est à dire sans solution de continuité, du nitrure de zirconium stoechiométrique (ZrN) à une région de transition comprenant du nitrure de zirconium sous-stoechiométrique et des oxynitrures de zirconium.

La teneur en azote du nitrure de zirconium sous-stoechiométrique dans la région de transition peut diminuer avec la profondeur, tandis que la teneur en oxygène des oxynitrures augmente avec la profondeur.

La région de transition comprend donc du nitrure de zirconium sous-stoechiométrique dont la teneur en azote diminue graduellement lorsque l'on progresse vers le coeur de l'article, alors que la présence d'oxygène augmente progressivement sous la forme de composés du type d'oxynitrure de zirconium (ZrOₓN_{y}), pour atteindre progressivement le coeur de l'article qui est constitué essentiellement de zircone partiellement réduite du type ZrO₂₋ₓ et/ou de zircone (ZrO₂). On comprendra, bien entendu, que la transition entre ces diverses régions se fait graduellement, la quantité d'un composé d'une région supérieure diminuant au profit d'un composé d'une couche inférieure.

Une analyse chimique de la couche superficielle par des techniques de mesure RBS-ERDA a permis de mettre en évidence, en fonction de la profondeur à partir de la surface de l'article, les concentrations relatives de zirconium, d'azote et d'oxygène correspondant aux composés chimiques précités.

L'invention a pour objet un procédé d'obtention d'un article en zircone ayant un coeur en ZrO2 et/ou en ZrO2 partiellement réduit, fini ou semi-fini, ayant un aspect extérieur métallique doré, caractérisé en ce qu'il comprend les étapes consistant à :
- se munir d'au moins un article en zircone préalablement conformé dans sa forme finie ou semi-finie;
- disposer ledit article dans une enceinte dans laquelle on crée un plasma obtenu à partir d'un mélange gazeux d'ammoniac et d'un gaz neutre, d'un mélange d'azote, d'hydrogène et d'un gaz neutre, ou encore d'une combinaison de ces deux mélanges, et
- maintenir ledit article dans le plasma pendant un temps d'environ 15 à 240 minutes, la température moyenne de l'article s'établissant dans ces conditions entre environ 600 et 1300°C.

Pour réaliser de tels articles, on a commencé par réaliser selon les techniques habituelles une pièce en céramique conventionnelle présentant toutes les propriétés recherchées, mais sans caractère métallique. On a ensuite soumis cette pièce au procédé selon l'invention afin de transformer la structure cristallographique de sa surface en y formant une couche superficielle comprenant notamment une région extérieure constituée de nitrure de zirconium.

La région extérieure de la couche superficielle de l'élément d'habillement en zircone transformée selon le procédé de l'invention confère ainsi à cet élément les caractéristiques optiques d'un nitrure de zirconium d'aspect métallique doré.

De plus, une analyse par diffraction aux rayons X rasants a montré que la structure de la couche superficielle qui avait été transformée en surface présentait la structure cristallographique correspondant à celle du nitrure de zirconium.

Une analyse par diffraction aux rayons X standard a montré que la structure cristallographique du coeur de la pièce correspondait à celle de la zircone tétragonale.

Les articles obtenus par ce procédé acquièrent certaines nouvelles propriétés, notamment une conductibilité électrique et un éclat métallique doré, tout en conservant les propriétés des céramiques, en particulier leur très grande dureté.

A la grande différence des "métaux durs" et des "cermets" connus, les articles en zircone selon l'invention ne contiennent pas de phase métallique contenant des Ni ou Co.

L'invention a également pour objet l'utilisation comme élément d'habillement de montre-bracelet résistant à l'usure d'une céramique ayant un coeur en ZrO2 et/ou en ZrO2 partiellement réduit, et qui comprend, sur au moins une partie de sa surface, une couche superficielle venant de matière avec ledit élément, l'épaisseur de ladite couche superficielle comprenant une pluralité de régions dont une région extérieure est formée de nitrure de zirconium ayant un éclat métallique doré.

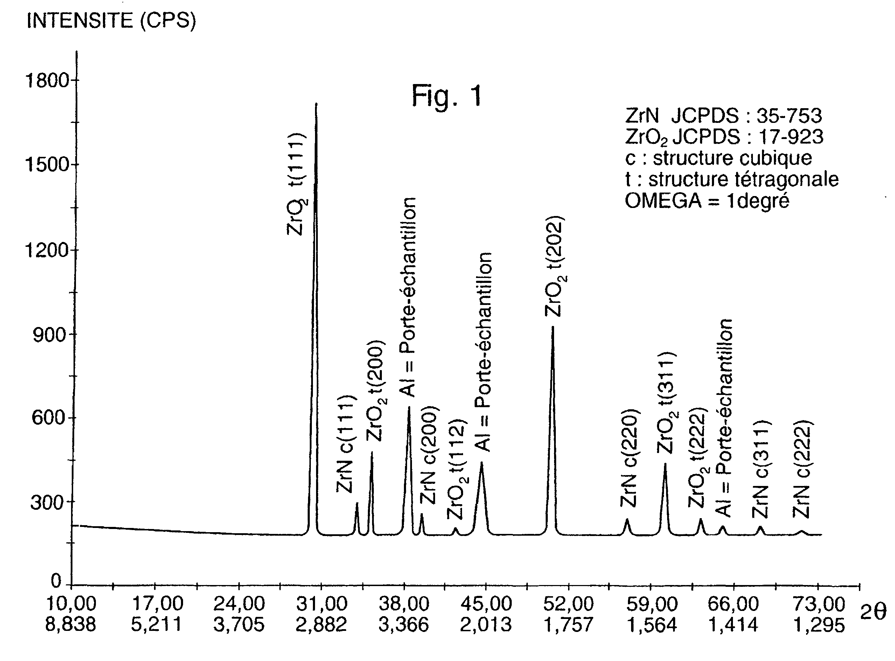

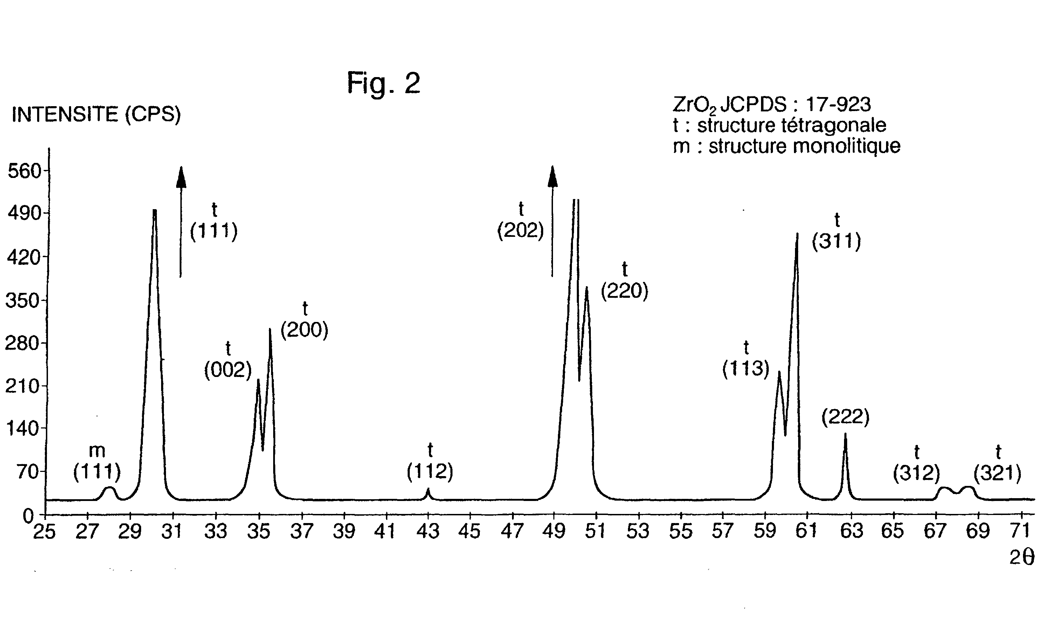

D'autres caractéristiques et avantages de l'invention seront mieux compris ci-après à l'aide de la description suivante d'un exemple de réalisation d'un article en zircone ayant un aspect extérieur métallique doré, description donnée à titre purement illustratif et faite en référence aux dessins annexés dans lesquels les figures 1 et 2 sont des spectres de diffraction de rayons X respectivement rasants (structure de la surface) et standards (structure du coeur) obtenus à partir de mesures sur un article selon l'invention.

A titre d'exemple, on se munit d'un article de départ en zircone ayant une configuration cristallographique tétragonale (oxyde de zirconium ZrO₂) de couleur blanche et qui est réalisé selon les techniques usuelles de fabrication d'articles en céramique, par exemple par frittage.

Cet article peut être un produit fini ayant la forme finale dans laquelle il va être utilisé, par exemple une pièce de forme généralement parallélépipédique ayant déjà subi un polissage miroir, et destinée à constituer un élément de l'habillement d'une montre, par exemple un maillon de bracelet.

Bien entendu, le cas échéant, l'article peut être un produit semi-fini sur lequel des opérations d'usinage ultérieures pourront être réalisées afin d'adapter cet article à son utilisation finale.

Cet article est ensuite introduit dans une enceinte dans laquelle on crée un plasma obtenu à partir de l'ionisation d'un mélange gazeux d'ammoniac et d'un gaz neutre, ou d'un mélange d'azote, d'hydrogène et d'un gaz neutre, ou encore d'une combinaison de ces deux mélanges. Ce plasma est obtenu par exemple à l'aide d'une décharge électrique.

Selon la méthode utilisée pour obtenir le plasma, l'utilisation de l'argon comme gaz neutre est avantageuse. Bien entendu, l'utilisation d'autres gaz neutres tel que le néon est envisageable.

L'article est maintenu dans le plasma pendant une durée comprise entre 15 et 240 minutes, et de préférence entre 15 et 150 minutes. La température moyenne de l'article au cours du traitement de ce dernier s'établit entre 600 et 1300°C selon les paramètres de mise en oeuvre (temps, composition du mélange gazeux, débits, etc.) du procédé.

Après cette dernière opération, l'article présente l'éclat métallique doré du nitrure de zirconium tout en conservant une très grande dureté superficielle, indispensable à l'obtention d'un article insensible à l'usure dans des conditions d'utilisation normales.

Un point essentiel du procédé réside dans le fait que l'on réalise une transformation de l'article sur une faible épaisseur, de l'ordre de 100 à 1000 nm, la zircone (oxyde de zirconium) dans la région extérieure étant transformée en nitrure de zirconium ayant un aspect métallique doré. Il s'agit donc d'une modification superficielle de la structure de la zircone en une nouvelle structure cristallographique correspondant à celle du nitrure de zirconium, et non d'un revêtement rapporté susceptible d'être arraché ou de se désolidariser de la surface de l'article, notamment lorsque celui-ci est soumis à des conditions d'usure importantes.

Plus particulièrement, la région extérieure de la couche superficielle qui présente la structure du nitrure de zirconium s'étend à partir de la surface sur une profondeur comprise entre 20 et 150 nm.

La région de transition se trouvant entre le coeur de l'article et la région extérieure comprend du nitrure de zirconium sous-stoechiométrique du type ZrN_{1-y}. La sous-stoechiométrie du nitrure de zirconium augmente progressivement (la teneur en azote diminuant) à mesure que l'on se rapproche du coeur de l'article tandis qu'apparaît progressivement, à partir d'une certaine profondeur, une quantité grandissante d'oxygène sous la forme d'oxynitrure de zirconium.

On atteint ensuite le coeur de la pièce qui est constitué essentiellement de zircone partiellement réduite du type ZrO₂₋ₓ et/ou de zircone ZrO₂.

Le procédé selon l'invention affecte donc non seulement la surface, mais aussi le coeur de l'article ou une partie de ce coeur qui se transforme en ZrO₂₋ₓ selon les dimensions de l'article, ce coeur présentant alors une couleur grise.

La structure de la couche superficielle de l'article en zircone transformée en surface a pu être mise en évidence par les spectres de diffraction obtenus avec des rayons X rasants, alors que la structure du coeur a été obtenue par des techniques standard de diffraction de rayons X. Dans ces spectres, visibles respectivement aux figures 1 et 2, on reconnaît les pics caractéristiques du nitrure de zirconium et de la zircone.

### Exemple 1 :

Plusieurs maillons de bracelets de montre en zircone tétragonale (ZrO2) blanche, ayant une longueur de 20 mm, une largeur 7 mm, et une épaisseur de 3 mm, sont placés dans une enceinte à plasma ayant un diamètre de 700 mm. Un mélange de gaz comprenant 43 % d'argon (Ar) et 57 % d'ammoniac (NH3) est introduit dans cette enceinte. Le débit d'argon est de 1250 sccm et le débit d'ammoniac est de 1650 sccm. La puissance est fixée à 220A et 89V. Par ailleurs, la pression dans l'enceinte est fixée à 1,5 millibars. Un plasma est produit classiquement entre la cathode et l'anode se trouvant dans l'enceinte. Le mélange de gaz ionisé vient alors en contact avec la surface des maillons et l'azote atomique du plasma se substitue à l'oxygène de la zircone. L'hydrogène présent dans l'enceinte sert de catalyseur pour cette réaction et empêche la réoxydation de la zircone. Au cours du traitement des maillons, la température dans l'enceinte s'établit à environ 1100°C. Le traitement dure trois heures. Les maillons sont ensuite retirés de l'enceinte et soumis à des analyses RBS (Rutherford back-scattering). Ces analyses montrent qu'une partie de la surface des maillons a été transformée en nitrure de zirconium (ZrN) sur une profondeur d'environ 100 nm. La dureté des maillons traités a également été mesurée. Les valeurs de dureté Vickers obtenues sont de l'ordre de 12 GPa. Les maillons obtenus ont un aspect métallique doré très proche de celui de l'or.

### Exemple 2 :

Une boîte de montre en zircone tétragonale blanche est disposée comme décrit dans l'exemple 1 dans une enceinte à plasma. La boîte est de forme générale rectangulaire et présente une longueur de 30 mm, une largeur de 24 mm et une hauteur de 5 mm. Cette boîte est évidée en son centre. Le mode opératoire est identique à celui décrit dans l'exemple 1, à la seule différence que le mélange de gaz utilisé comprend 74 % d'azote, 4 % d'hydrogène, et 22 % d'argon. Le débit d'argon est de 1200 sccm, le débit d'azote est de 4000 sccm, et le débit d'hydrogène de 200 sccm. La puissance est fixée à 170A et 60V. Dans cet exemple, la température dans l'enceinte s'établit à environ 1000°C lors du traitement. Le traitement dure quatre heures. Les boîtes de montre obtenues ont un aspect métallique doré similaire aux maillons décrits précédemment, et présentent les mêmes caractéristiques de transformation et de dureté que celles décrites dans l'exemple 1.

Il résulte de ce qui précède que le procédé selon l'invention permet de réaliser des articles, notamment décoratifs, d'aspect métallique doré, cumulant certaines des caractéristiques des céramiques et des métaux.

Il est ainsi possible d'obtenir des articles décoratifs d'une grande dureté, présentant un aspect et un éclat métallique doré particulièrement esthétiques, faciles à mettre en forme et non susceptibles de provoquer des réactions allergiques avec la peau du porteur. De la sorte, ces articles sont parfaitement adaptés à des utilisations en tant qu'articles décoratifs et en particulier en tant qu'éléments de construction de bracelets ou de boîtes pour pièces d'horlogerie.

## Revendications

1. Utilisation comme élément d'habillement d'une montre-bracelet résistant à l'usure d'une céramique ayant un coeur en ZrO2 et/ou en ZrO2 partiellement réduit, et qui comprend, sur au moins une partie de sa surface, une couche superficielle venant de matière avec ledit élément, ladite couche superficielle comprenant une pluralité de régions dont une région extérieure est formée de nitrure de zirconium ayant un éclat métallique doré.

2. Procédé d'obtention d'un article fini ou semi-fini à base de zircone ayant un coeur en ZrO2 et/ou en ZrO2 partiellement réduit, l'article ayant un aspect extérieur métallique, **caractérisé en ce qu'**il comprend les étapes consistant à :
- se munir d'au moins un article en zircone préalablement conformé dans sa forme finie ou semi-finie;
- disposer ledit article dans une enceinte dans laquelle on crée un plasma obtenu à partir d'un mélange gazeux d'ammoniac, et d'un gaz neutre, ou d'un mélange d'azote, d'hydrogène et d'un gaz neutre, ou encore d'une combinaison de ces deux mélanges, et
- maintenir ledit article dans le plasma pendant un temps d'environ 15 à 240 minutes, la température moyenne de l'article s'établissant dans ces conditions entre 600 et 1300°C.

3. Procédé selon la revendication 2, **caractérisé en ce que** le gaz neutre est l'argon.

## Patentansprüche

1. Verwendung einer Keramik als verschleißbeständiges Verkleidungselement einer Armbanduhr, wobei die Keramik einen Kern aus ZrO₂ und/oder aus teilweise reduziertem ZrO₂ besitzt und wenigstens auf einem Teil ihrer Oberfläche eine Oberflächenschicht aufweist, die mit dem Element einteilig ausgebildet ist, wobei die Oberflächenschicht mehrere Bereiche aufweist, wovon ein äußerer Bereich aus Zirkonnitrid mit einem goldmetallischen Glanz gebildet ist.

2. Verfahren zum Erhalten eines fertigen oder halbfertigen Gegenstandes auf Zirkonoxidbasis, der einen Kern aus ZrO₂ und/oder aus teilweise reduziertem ZrO₂ besitzt, wobei der Gegenstand ein metallisches äußeres Aussehen hat, **dadurch gekennzeichnet, daß** es die Schritte umfaßt, die darin bestehen:
- wenigstens einen Gegenstand aus Zirkonoxid vorzusehen, der im voraus seine fertige oder halbfertige Form erhalten hat;
- den Gegenstand in einem Behälter anzuordnen, in dem ein Plasma erzeugt wird, das anhand eines Gasgemisches aus Ammoniak und einem neutralen Gas oder anhand eines Gemisches aus Stickstoff, Wasserstoff und einem neutralen Gas oder aber aus einer Kombination dieser beiden Gemische erhalten wird, und
- den Gegenstand in dem Plasma während einer Dauer von etwa 15 bis 240 Minuten zu halten, wobei die mittlere Temperatur des Gegenstandes unter diesen Bedingungen im Bereich von 600 bis 1300 °C liegt.

3. Verfahren nach Anspruch 2, **dadurch gekennzeichnet, daß** das neutrale Gas Argon ist.

## Claims

1. Use of a ceramic material having a core of ZrO2 and/or partially reduced ZrO2 as a wear resistant exterior part for a wristwatch, said part including, over at least part of its surface, a superficial layer integral with said part, the thickness of said superficial layer including a plurality of regions of which one external region is formed of zirconium nitride having a gold metallic brilliance.

2. Method for obtaining a finished or semi-finished zirconia based ceramic article having a core of ZrO2 and/or partially reduced ZrO2, the article having a gold metallic external appearance, **characterised in that** it includes the following steps, consisting of:
- providing at least one zirconia article previously shaped into its finished or semi-finished shape;
- placing said article in a reaction vessel in which a plasma is generated from a gaseous mixture of ammonia and an inert gas, or a mixture of nitrogen, hydrogen and an inert gas, or a combination of such two mixtures; and
- maintaining said article in the plasma for a period of time of approximately 15 to 240 minutes, the average temperature of the article being settled in these conditions between 600 and 1300 °C

3. Method according to claim 2, **characterised in that** the inert gas is argon.
